# EUROPÄISCHE PATENTSCHRIFT

(11) **EP 3 613 716 B1**
(45) Veröffentlichungstag und Bekanntmachung des Hinweises auf die Patenterteilung: **29.07.2020**
(21) Anmeldenummer: 18189903.0
(22) Anmeldetag: 21.08.2018
(51) Int. Cl.: C04B 35/043, C04B 35/626, C04B 35/628, C04B 35/634, C04B 35/64

(54) **FEUERFESTES ERZEUGNIS, EIN VERSATZ ZUR HERSTELLUNG DES ERZEUGNISSES, EIN VERFAHREN ZUR HERSTELLUNG DES ERZEUGNISSES SOWIE EINE VERWENDUNG DES ERZEUGNISSES**
REFRACTORY PRODUCT, BATCH FOR PRODUCING THE PRODUCT, PROCESS FOR PRODUCING THE PRODUCT AND USE OF THE PRODUCT
PRODUIT RÉFRACTAIRE, LOT DE PRODUCTION DU PRODUIT, PROCÉDÉ DE FABRICATION DU PRODUIT ET UTILISATION DU PRODUIT

(43) Veröffentlichungstag der Anmeldung: 26.02.2020
(60) Teilanmeldung: 20180103.2
(73) Patentinhaber: Refractory Intellectual Property GmbH & Co. KG, 1100 Wien (AT)
(72) Erfinder: LYNKER, Andreas, 35457 Lollar (DE); TELSER, Heinz, 1160 Wien (AT); NIEVOLL, Josef, 1060 Wien (AT); GEITH, Martin, 8700 Leoben (AT)
(74) Vertreter: Berkenbrink, Kai-Oliver

(56) Entgegenhaltungen:
- AT-A2- 513 100
- DD-A1- 275 664
- JP-A- H02 180 746

## Beschreibung

Die Erfindung betrifft ein feuerfestes Erzeugnis, einen Versatz zur Herstellung des Erzeugnisses, ein Verfahren zur Herstellung des Erzeugnisses sowie eine Verwendung des Erzeugnisses.

Der Begriff "feuerfestes Erzeugnis" im Sinne der Erfindung bezeichnet insbesondere feuerfeste Erzeugnisse mit einer Einsatztemperatur von über 600°C und bevorzugt feuerfeste Werkstoffe gemäß DIN 51060: 2006, also Werkstoffe mit einem Kegelfallpunkt > SK17. Die Ermittlung des Kegelfallpunktes kann insbesondere gemäß DIN EN 993-12: 1997-06 erfolgen.

Mit einem "Versatz" wird bekanntermaßen eine Zusammensetzung aus einer oder mehreren Komponenten beziehungsweise Rohstoffen bezeichnet, durch die mittels einer Temperaturbehandlung, also insbesondere mittels eines Brandes, beispielsweise in einem Ofen, ein feuerfestes Erzeugnis herstellbar ist. Eine solche Temperaturbehandlung kann insbesondere mittels eines keramischen Brandes erfolgen, wodurch aus dem Versatz ein gesintertes feuerfestes keramisches Erzeugnis herstellbar ist.

Komponenten zur Herstellung von feuerfesten Erzeugnissen liegen regelmäßig in Form von Rohstoffen vor, die auf Metalloxiden basieren. Ein üblicher Rohstoff zur Herstellung von feuerfesten Erzeugnissen ist Magnesia, die auf dem Metalloxid Magnesiumoxid (MgO) basiert. Rohstoffe in Form von Magnesia können beispielsweise in Form von Sintermagnesia oder Schmelzmagnesia vorliegen.

Solche feuerfesten Erzeugnisse, die auf Basis von Rohstoffen in Form von Magnesia hergestellt worden sind, werden auch als Magnesiaerzeugnisse beziehungsweise, soweit es sich bei diesen Erzeugnissen um geformte Erzeugnisse handelt, als Magnesiasteine bezeichnet.

Auf Grund des hohen Schmelzpunktes von MgO weisen feuerfeste Magnesiaerzeugnisse eine hohe Heißfestigkeit auf. Ferner weisen Magnesiaerzeugnisse wegen ihres basischen Charakters eine gute Beständigkeit gegenüber basischen Angriffen auf, also beispielsweise gegenüber Stahlwerksschlacken oder Zementklinker im Zementdrehrohrofen.

Allerdings weisen solch feuerfeste Magnesiaerzeugnisse auf Grund der hohen Wärmedehnung von MgO eine hohe Empfindlichkeit gegenüber thermischen Spannungen auf. Dieser Empfindlichkeit gegenüber thermischen Spannungen äußert sich in einer verhältnismäßig geringen Gefügeelastizität und einem entsprechend hohen Elastizitätsmodul (E-Modul) solch feuerfester Magnesiaerzeugnisse.

Zur Verringerung der Empfindlichkeit feuerfester Magnesiaerzeugnisse gegenüber thermischen Spannungen ist es bekannt, bestimmte Komponenten in feuerfeste Magnesiaerzeugnisse einzubinden, durch die der Elastizitätsmodul feuerfester Magnesiaerzeugnisse verbessert werden kann.

Insbesondere ist es zur Verbesserung des Elastizitätsmoduls von feuerfesten Magnesiaerzeugnissen bekannt, dass diese einen Anteil an Magnesiaspinell (MgO · Al₂O₃) umfassen. Durch einen solchen Anteil an Magnesiaspinell in Magnesiaerzeugnissen kann die Empfindlichkeit von Magnesiaerzeugnissen gegenüber thermischen Spannungen reduziert und deren Elastizität bzw. Gefügeelastizität verbessert werden, was sich insbesondere in einem verringerten Elastizitätsmodul äußert.

Um in einem Magnesiaerzeugnis neben MgO auch Magnesiaspinell zur Verfügung zu stellen, kann dem Versatz zur Herstellung des Magnesiaerzeugnisses entweder bereits vorsynthetisierter Magnesiaspinell als Rohstoff zugegeben werden. Alternativ kann dem Versatz ein Rohstoff auf Basis von Al₂O₃ zugegeben werden, so dass sich während des Brandes aus Al₂O₃ und MgO Magnesiaspinell bildet. Dieser Prozess ist auch als sogenannte "in-situ-Bildung" von Magnesiaspinell bekannt.

Während sich Magnesiaspinell, wie vorstehend ausgeführt, vorteilhaft auf die Elastizität eines feuerfesten Erzeugnisses auf Basis von Magnesia auswirkt, kann sich das Al₂O₃ jedoch nachteilig auf die Heißfestigkeit des feuerfesten Erzeugnisses auswirken. So kann das Al₂O₃ mit CaO, welches dem Erzeugnis als Nebenbestandteil der Magnesiarohstoffe zugeführt wird, niedrig schmelzende Calcium-Aluminat-Phasen bilden, durch die die Heißfestigkeit des Erzeugnisses erheblich reduziert werden kann. Ferner können sich bei bestimmten Verhältnissen der Anteile von Al₂O₃, CaO und SiO₂ zueinander niedrig schmelzende Calcium-Aluminat-Silikat-Phasen bilden. Schließlich kann mit steigendem Gehalt an Al₂O₃ in einem feuerfesten Magnesiaerzeugnis dessen Beständigkeit gegen basische Angriffe reduziert werden. So steigt mit höheren Gehalten an Al₂O₃ in einem feuerfesten Magnesiaerzeugnis beispielsweise die Gefahr eines Klinkerschmelzangriffs auf Grund einer Klinkerschmelzinfiltration in einem Zementdrehrohrofen.

Allgemein lässt sich damit festhalten, dass in einem feuerfesten Erzeugnis auf Basis Magnesia mit steigendem Gehalt an Al₂O₃ die Elastizität des Erzeugnisses zwar verbessert, seine Beständigkeit gegenüber basischen Angriffen sowie dessen Heißfestigkeit jedoch reduziert wird.

AT 513 100 A2 offenbart einen korrosionsbeständigen Ziegel, welcher einen Hauptkörper und eine Abdeckschicht umfasst, wobei die Abdeckschicht auf einer Oberfläche des Hauptkörpers ausgebildet ist, wobei der Hauptkörper ein Al-Mg-basierter Ziegel ist, wobei die Abdeckschicht ein ternäres Oxid von Fe und jeder Komponente des Al-Mg-basierten Ziegels ist, und wobei die Abdeckschicht aus einer festen Spinelllösung mit einem Schmelzpunkt von 1600°C oder höher hergestellt ist. DD 275 664 A1 offenbart ein Verfahren zur Herstellung von feuerfesten Massen und Steinen, wobei eine Oberflächenmodifizierung des MgO-Grobkornes mittels einer Spinellbildners (Al₂O₃) erfolgt.

Der Erfindung liegt die Aufgabe zu Grunde, ein feuerfestes Erzeugnis auf Basis Magnesia zur Verfügung zu stellen, welches sowohl ein gutes Elastizitätsverhalten als auch gleichzeitig eine hohe Heißfestigkeit aufweist.

Der Erfindung liegt ferner die Aufgabe zu Grunde, ein feuerfestes Erzeugnis auf Basis Magnesia zur Verfügung zu stellen, welches sowohl ein gutes Elastizitätsverhalten als auch gleichzeitig eine hohe Heißfestigkeit und Beständigkeit gegenüber basischen Angriffen aufweist.

Eine weitere Aufgabe der Erfindung besteht darin, einen Versatz zur Herstellung eines solchen Erzeugnisses zur Verfügung zu stellen.

Eine weitere Aufgabe der Erfindung besteht darin, ein Verfahren zur Herstellung eines solchen Erzeugnisses zur Verfügung zu stellen.

Erfindungsgemäß wird ein feuerfestes Erzeugnis zur Verfügung gestellt, welches die folgenden Merkmale umfasst:
Das Erzeugnis weist eine chemische Zusammensetzung auf, nach welcher die folgenden Oxide jeweils in den folgenden Anteilen vorliegen:

| | |
|---|---|
| MgO: | wenigstens 92 Masse-%; |
| Al₂O₃: | 1,5 bis 7 Masse-%; |
| Fe₂O₃: | unter 3 Masse-%; |
| CaO + SiO₂: | 1 bis 3 Masse-%; |

das Erzeugnis umfasst beschichtete Körner, die die folgenden Merkmale umfassen:
Die beschichteten Körner weisen eine Korngröße von wenigstens 2 mm auf;
die beschichteten Körner bestehen aus Magnesia, dessen Oberfläche zumindest abschnittsweise eine Beschichtung aus Magnesiaspinell aufweist.

Überraschend hat sich erfindungsgemäß herausgestellt, dass ein feuerfestes Erzeugnis auf Basis von Magnesia zur Verfügung gestellt werden kann, durch welches die vorbezeichneten Aufgaben gelöst werden können, soweit dieses Erzeugnis die vorbezeichnete, chemische Zusammensetzung aufweist und gleichzeitig die vorbezeichneten, beschichteten Körner umfasst.

Die hierin gemachten Angaben in Masse-%, die die chemische Zusammensetzung des erfindungsgemäßen Erzeugnisses kennzeichnen, sind jeweils bezogen auf die Gesamtmasse des erfindungsgemäßen Erzeugnisses, soweit in Einzelfall nicht anders angegeben.

Die Anteile an Oxiden in dem erfindungsgemäßen Erzeugnis sowie der hierin angegebene Glühverlust (LOI), also die chemische Zusammensetzung des erfindungsgemäßen Erzeugnisses sowie der Glühverlust, werden mittels Röntgenfluoreszenzanalyse (RFA) bestimmt gemäß DIN EN ISO 12677:2013-02.

Ein wesentlicher Aspekt der Erfindung besteht darin, dass das erfindungsgemäße Erzeugnis beschichtete Körner umfasst, die eine Korngröße von wenigstens 2 mm aufweisen und aus Magnesia bestehen, dessen Oberfläche zumindest abschnittsweise eine Beschichtung aus Magnesiaspinell aufweist. Das Vorsehen solch beschichteter Körner in dem erfindungsgemäßen feuerfesten Erzeugnis beruht auf mehreren erfindungsgemäßen Erkenntnissen. Gemäß einer Erkenntnis wurde festgestellt, dass solch beschichtete Körner, die aus Magnesia bestehen, dessen Oberfläche zumindest abschnittsweise eine Beschichtung aus Magnesiaspinell aufweist, hinsichtlich ihrer elastifizierenden Eigenschaften in einem feuerfesten Erzeugnis auf Magnesia eine ähnlich elastifizierende Wirkung entfalten wie ein massives Korn aus Magnesiaspinell, also ein Korn, das vollständig aus Magnesiaspinell besteht. Ferner wurde erfindungsgemäß erkannt, dass durch ein solch beschichtetes Korn zwar eine elastifizierende Wirkung erzielt werden kann, die im Wesentlichen der Wirkung eines massiven Korns aus Magnesiaspinell entspricht, ein allein mit Magnesiaspinell beschichtetes Magnesiakorn jedoch die Möglichkeit bietet, einen wesentlich geringeren Anteil an Al₂O₃ in das Erzeugnis einzutragen als durch ein massives Korn aus Magnesiaspinell. In dem Umfang, in dem der Eintrag an Al₂O₃ in das Erzeugnis reduziert wird, werden jedoch auch die negativen Einflüsse des Al₂O₃ auf die Heißfestigkeit und die Beständigkeit des Erzeugnisses gegenüber basischen Angriffen reduziert.

Ferner haben die Erfinder überraschend erkannt, dass sich die vorbezeichneten, vorteilhaften Wirkungen der beschichteten Körner in dem Erzeugnis in besonderen Maße allein dann entfalten, wenn die beschichteten Körner eine Korngröße von wenigstens 2 mm aufweisen. Worauf dieser Effekt beruht, ist nicht im Einzelnen geklärt. Die Erfinder vermuten, dass sich die elastifizierende Wirkung der beschichteten Körner in besonderem Maße erst ab einer Korngröße von 2 mm einstellt. Ferner vermuten die Erfinder, dass (bei gleichbleibender Dicke der Beschichtung aus Magnesiaspinell) ab einer Korngröße der beschichteten Körner von wenigstens 2 mm sich das Masseverhältnis von MgO zu Al₂O₃ der beschichteten Körner derart zu Gunsten des Masseanteils von MgO verschiebt, dass es die beschichteten Körner erst ab einer Korngröße von wenigstens 2 mm erlauben, den erfindungsgemäßen, geringen Anteil von Al₂O₃ im Erzeugnis bei einer gleichzeitig ausreichend elastifizierenden Wirkung der beschichteten Körner zu verwirklichen.

Erfindungsgemäß wurde festgestellt, dass die beschichteten Körner ihre beste elastifizierende Wirkung bei einem gleichzeitig nur geringen Eintrag an Al₂O₃ in das Erzeugnis entfalten, wenn die beschichteten Körner eine Korngröße im Bereich von 3 bis 5 mm aufweisen. Nach einer Ausführungsform der Erfindung ist daher vorgesehen, dass die beschichteten Körner eine Korngröße im Bereich von 2 bis 5 mm aufweisen, und nach einer besonders bevorzugten Ausführungsform ist vorgesehen, dass die beschichteten Körner eine Korngröße im Bereich von 3 bis 5 mm aufweisen.

Die beschichteten Körner bestehen aus Magnesia, dessen Oberfläche zumindest abschnittsweise eine Beschichtung aus Magnesiaspinell aufweist.

Indem die Magnesia der beschichteten Körner die Beschichtung aus Magnesiaspinell abschnittsweise aufweist, kann die Magnesia der beschichteten Körner ganz oder teilweise mit Magnesiaspinell beschichtet sein. Soweit die Oberfläche der Magnesia der beschichteten Körner vollständig eine Beschichtung aus Magnesiaspinell aufweist, umgibt die Magnesiaspinell die Magnesia vollständig, also wie eine Hülle oder Schale, in der die Magnesia wie ein "Kern" einliegt. Soweit die Magnesia die Beschichtung aus Magnesiaspinell allein abschnittsweise aufweist, kann die Beschichtung aus Magnesiaspinell beispielsweise Lücken oder Spalten aufweisen beziehungsweise kann die Magnesia der beschichteten Körner beispielsweise auch nur partiell, also in Form voneinander getrennter Abschnitte beziehungsweise Bereiche, mit Magnesiaspinell beschichtet sein. Bevorzugt weist die Oberfläche der Magnesia der beschichteten Körner über wenigstens 50 % der Fläche der Oberfläche der Magnesia eine Beschichtung aus Magnesiaspinell auf. Besonders bevorzugt weist die Oberfläche der Magnesia der beschichteten Körner jedoch ganz überwiegend oder auch vollständig eine Beschichtung aus Magnesiaspinell auf. Erfindungsgemäß hat sich herausgestellt, dass solch vollständig mit Magnesiaspinell beschichtete Körner aus Magnesia eine besonders starke elastifizierende Wirkung im Erzeugnis entfalten.

Die Beschichtung aus Magnesiaspinell weist bevorzugt eine Dicke im Bereich von 10 bis 500 µm, und besonders bevorzugt eine Dicke im Bereich von 25 bis 400 µm auf. Erfindungsgemäß wurde festgestellt, dass durch die beschichteten Körner, die eine Beschichtung aus Magnesiaspinell in einer solchen Dicke aufweisen, zum einen eine gute elastifizierende Wirkung im erfindungsgemäßen Erzeugnis entfaltet werden kann und gleichzeitig das Massenverhältnis von MgO (aus der beschichteten Magnesia sowie dem Anteil an MgO in der Beschichtung aus Magnesiaspinell) zu Al₂O₃ (aus der Beschichtung aus Magnesiaspinell) so hoch ist, dass bei einer guten elastifizierenden Wirkung der beschichteten Körner gleichzeitig nur ein verhältnismäßig geringer Anteil an Al₂O₃ in das erfindungsgemäße Erzeugnis eingetragen werden kann.

Die Beschichtung aus Magnesiaspinell kann in unmittelbarem Kontakt zur beschichteten Magnesia vorliegen oder, ganz oder teilweise, durch einen Spalt von dieser getrennt sein. Ferner kann die Beschichtung aus Magnesiaspinell ein- oder mehrlagig aufgebaut sein. Soweit die Beschichtung aus Magnesiaspinell mehrlagig aufgebaut ist, können diese mehrere Lagen aus Magnesiaspinell beispielsweise ganz oder abschnittsweise durch einen Spalt voneinander getrennt sein.

Als Korngröße der beschichteten Körner ist gemäß üblicher Definition im Stand der Technik der äußere Kornumfang relevant, also der Umfang entlang der äußeren Korngrenze der beschichteten Körner. Bei einer mehrlagigen Beschichtung aus Magnesiaspinell ist damit der Außenumfang der äußersten Beschichtung relevant. Die Korngröße der beschichteten Körner ist bestimmt gemäß DIN EN ISO 13383-1:2016-11.

Der Kern aus Magnesia der beschichteten Körner besteht überwiegend aus Magnesia (MgO), wobei neben MgO in der Magnesia die üblichen Nebenoxide und Verunreinigungen vorliegen können, die durch die Rohstoffe üblicherweise in ein feuerfestes Erzeugnis eingetragen werden, also beispielsweise Nebenoxide in Form von CaO, SiO₂, Al₂O₃ oder Fe₂O₃. Diese liegen in der Regel jedoch unter 10 Masse-%, bezogen auf die Masse an Magnesia. Die Beschichtung aus Magnesiaspinell der beschichteten Körner besteht aus Magnesiaspinell, also echtem Spinell beziehungsweise Magnesia-Alumina-Spinell (MgO·Al₂O₃ beziehungsweise MgAl₂O₄). Der Magnesiaspinell der Beschichtung aus Magnesiaspinell liegt bevorzugt in Form eines stöchiometrischen Magnesiaspinells vor. Neben Magnesiaspinell kann die Beschichtung wiederum die üblichen Verunreinigungen und Nebenoxide aufweisen, die durch die üblicherweise verwendeten Rohstoffe in ein feuerfestes Erzeugnis eingetragen werden, also insbesondere CaO, SiO₂ und Fe₂O₃.

Erfindungsgemäß hat sich herausgestellt, dass die beschichteten Körner ihre elastifizierende Wirkung bei einem gleichzeitig geringen Eintrag an Al₂O₃ in das Erzeugnis besonders vorteilhaft dann entfalten können, wenn das Erzeugnis die beschichteten Körner in einem Anteil im Bereich von 5 bis 24 Masse-% umfasst. Nach einem Ausführungsbeispiel ist daher vorgesehen, dass das Erzeugnis die beschichteten Körner in einem Anteil im Bereich von 5 bis 24 Masse-% umfasst. Erfindungsgemäß wurde festgestellt, dass diese vorteilhaften Wirkungen der beschichteten Körner weiter verbessert werden können, wenn die beschichteten Körner zunehmend einem Anteil in einem Bereich von 10 Masse-% angenähert sind. Nach einer weiter bevorzugten Ausführungsform ist daher vorgesehen, dass das Erzeugnis die beschichteten Körner in einem Anteil im Bereich von 3 bis 20 Masse-%, noch bevorzugter in einem Anteil im Bereich von 5 bis 15 Masse-% und ganz besonders bevorzugt in einem Anteil im Bereich von 7 bis 15 Masse-% umfasst. Diese Anteile an Masse-% der beschichteten Körner im erfindungsgemäßen Erzeugnis sind jeweils bezogen auf die Gesamtmasse des erfindungsgemäßen Erzeugnisses.

Das erfindungsgemäße Erzeugnis weist eine chemische Zusammensetzung auf, wonach MgO in einem Massenanteil von wenigstens 92 Masse-% im Erzeugnis vorliegt. Erfindungsgemäß wurde festgestellt, dass die Eigenschaften des erfindungsgemäßen Erzeugnisses hinsichtlich seiner Elastizität sowie seiner Heißfestigkeit zunehmend verbessert werden, soweit das erfindungsgemäße Erzeugnis eine chemische Zusammensetzung aufweist, bei dem der Anteil an MgO zunehmend einen Anteil im Bereich von 93,5 bis 96 Masse-% angenähert ist. Diese verbesserten Eigenschaften hinsichtlich der Elastizität sind indiziert durch ein zunehmend verringertes Elastizitätsmodul, und die zunehmend verbesserten Eigenschaften hinsichtlich der Heißfestigkeit sind indiziert durch einen zunehmend vergrößerten T_{0,5}-Wert. Insoweit ist nach einem bevorzugten Ausführungsbeispiel vorgesehen, dass das erfindungsgemäße Erzeugnis eine chemische Zusammensetzung mit einem Anteil an MgO im Bereich von 92 bis 97,5 Masse-%, noch weiter bevorzugt mit einem Anteil im Bereich von 92 bis 96 Masse-%, noch weiter bevorzugt mit einem Anteil im Bereich von über 93 bis 96 Masse-% und noch weiter bevorzugt mit einem Anteil im Bereich von 93,5 bis 96 Masse-% aufweist.

Das erfindungsgemäße Erzeugnis weist eine chemische Zusammensetzung mit einem Anteil an Al₂O₃ im Bereich von 1,5 bis 7 Masse-% auf. Erfindungsgemäß wurde festgestellt, dass die Eigenschaften des erfindungsgemäßen Erzeugnisses hinsichtlich seiner Elastizität (wiederum indiziert durch den Elastizitätsmodul) sowie seiner Heißfestigkeit (indiziert durch den T₀-Wert) zunehmend verbessert werden, soweit das erfindungsgemäße Erzeugnis eine chemische Zusammensetzung aufweist, bei dem der Anteil an Al₂O₃ zunehmend einem Anteil im Bereich von 2 bis 3,5 Masse-% angenähert ist. Insoweit ist nach einer bevorzugten Ausführungsform vorgesehen, dass das erfindungsgemäße Erzeugnis eine chemische Zusammensetzung mit einem Anteil an Al₂O₃ im Bereich von 1,5 bis 5 Masse-%, noch weiter bevorzugt mit einem Anteil im Bereich von 1,5 bis 3,5 Masse-% und noch weiter bevorzugt mit einem Anteil im Bereich von 2 bis 3,5 Masse-% aufweist.

Das erfindungsgemäße Erzeugnis weist eine chemische Zusammensetzung mit einem Anteil an Fe₂O₃ unter 3 Masse-% auf. Erfindungsgemäß wurde festgestellt, dass die Eigenschaften des erfindungsgemäßen Erzeugnisses hinsichtlich seiner Heißfestigkeit (indiziert durch den T₀-Wert) zunehmend verbessert werden, soweit das erfindungsgemäße Erzeugnis eine chemische Zusammensetzung aufweist, bei dem der Anteil an Fe₂O₃ zunehmend einem Anteil unter 1 Masse-%, insbesondere einem Anteil im Bereich von 0,1 bis unter 1 Masse-% angenähert ist. Insoweit ist nach einer bevorzugten Ausführungsform vorgesehen, dass das erfindungsgemäße Erzeugnis eine chemische Zusammensetzung mit einem Anteil an Fe₂O₃ unter 2 Masse-%, noch weiter bevorzugt mit einem Anteil unter 1 Masse-% und noch weiter bevorzugt mit einem Anteil im Bereich von 0,1 bis unter 1 Masse-% aufweist.

Das erfindungsgemäße Erzeugnis weist eine chemische Zusammensetzung mit einem Anteil an CaO + SiO₂ (also eine chemische Zusammensetzung mit einem Anteil an einer Gesamtmasse dieser beiden Oxide) im Bereich von 1 bis 3 Masse-% auf. Erfindungsgemäß wurde festgestellt, dass die Eigenschaften des erfindungsgemäßen Erzeugnisses hinsichtlich seiner Elastizität (indiziert durch den Elastizitätsmodul) sowie seiner Heißfestigkeit (indiziert durch den T₀-Wert) zunehmend verbessert werden, soweit das erfindungsgemäße Erzeugnis eine chemische Zusammensetzung aufweist, bei dem der Anteil an CaO + SiO₂ zunehmend einem Anteil im Bereich von 2 bis 3 Masse-% angenähert ist. Insoweit ist nach einer bevorzugten Ausführungsform vorgesehen, dass das erfindungsgemäße Erzeugnis eine chemische Zusammensetzung mit einem Anteil an CaO + SiO₂ im Bereich von 2 bis 3 Masse-% aufweist. Erfindungsgemäß wurde festgestellt, dass sich bei solchen Anteilen an CaO und SiO₂ im Erzeugnis keine oder nur geringfügige Anteile an niedrig schmelzenden Calcium-Aluminat-Silikat-Phasen bilden, durch die die Heißfestigkeit des Erzeugnisses verschlechtert werden könnte.

Zur Verbesserung der Heißfestigkeit des Erzeugnisses kann ferner bevorzugt vorgesehen sein, dass das Massenverhältnis von CaO zu SiO₂ im Erzeugnis wenigstes 2 beträgt und besonders bevorzugt größer als 2 ist. Nach einer bevorzugten Ausführungsform liegt das Massenverhältnis von CaO zu SiO₂ im Erzeugnis bei über 2 und bei maximal 2,8.

Nach einer bevorzugten Ausführungsform ist vorgesehen, dass das erfindungsgemäße Erzeugnis eine chemische Zusammensetzung aufweist, nach welcher die folgenden Oxide jeweils in den folgenden Anteilen vorliegen:
MgO: 92 bis 97,5 Masse-%;
Al₂O₃: 1,5 bis 7 Masse-%;
Fe₂O₃: unter 3 Masse-%;
CaO + SiO₂: 1 bis 3 Masse-%.

Nach einer noch bevorzugteren Ausführungsform ist vorgesehen, dass das erfindungsgemäße Erzeugnis eine chemische Zusammensetzung aufweist, nach welcher die folgenden Oxide jeweils in den folgenden Anteilen vorliegen:
MgO: 92 bis 96 Masse-%;
Al₂O₃: 1,5 bis 5 Masse-%;
Fe₂O₃: unter 2 Masse-%;
CaO + SiO₂: 1 bis 3 Masse-%.

Nach einer noch bevorzugteren Ausführungsform ist vorgesehen, dass das erfindungsgemäße Erzeugnis eine chemische Zusammensetzung aufweist, nach welcher die folgenden Oxide jeweils in den folgenden Anteilen vorliegen:
MgO: 93 bis 96 Masse-%;
Al₂O₃: 1,5 bis 3,5 Masse-%;
Fe₂O₃: unter 1 Masse-%;
CaO + SiO₂: 1 bis 3 Masse-%.

Nach einer noch weiter bevorzugteren Ausführungsform ist vorgesehen, dass das erfindungsgemäße Erzeugnis eine chemische Zusammensetzung aufweist, nach welcher die folgenden Oxide jeweils in den folgenden Anteilen vorliegen:
MgO: 93,5 bis 96 Masse-%;
Al₂O₃: 2 bis 3,5 Masse-%;
Fe₂O₃: unter 1 Masse-%;
CaO + SiO₂: 1 bis 3 Masse-%.

Erfindungsgemäß wurde festgestellt, dass sich die Anwesenheit weiterer Oxide, die neben den Oxiden MgO, Al₂O₃, Fe₂O₃ und CaO + SiO₂ im erfindungsgemäßen feuerfesten Erzeugnis vorliegen, negativ auf die Elastizität und Heißfestigkeit des Erzeugnisses ausüben kann. Insofern ist nach einer bevorzugten Ausführungsform vorgesehen, dass das erfindungsgemäße feuerfeste Erzeugnis eine chemische Zusammensetzung aufweist, nach welcher die Oxide MgO, Al₂O₃, Fe₂O₃ und CaO + SiO₂ in einem Anteil in einer Gesamtmasse von wenigstens 99 Masse-% im erfindungsgemäßen Erzeugnis vorliegen, und noch weiter bevorzugt in einem Anteil in einer Gesamtmasse von wenigstens 99,5 Masse-%.

Neben den Oxiden MgO, Al₂O₃, Fe₂O₃ und CaO + SiO₂ kann das erfindungsgemäße Erzeugnis weitere Oxide aufweisen, die insbesondere als Fremdoxide bzw. Verunreinigungen über die Rohstoffe in das feuerfeste Erzeugnis eingetragen worden sind, beispielsweise die Oxide MnO, Na₂O oder K₂O.

Insoweit kann das erfindungsgemäße feuerfeste Erzeugnis eine chemische Zusammensetzung aufweisen, nach welcher weitere Oxide, die neben den Oxiden MgO, Al₂O₃, Fe₂O₃ und CaO + SiO₂ im Erzeugnis vorliegen, in einem Anteil in einer Gesamtmasse im Bereich von 0 bis 1 Masse-%, und noch weiter bevorzugt in einem Anteil in einer Gesamtmasse im Bereich von 0 bis 0,5 Masse-% im Erzeugnis vorliegen.

Erfindungsgemäß wurde festgestellt, dass die Eigenschaften des erfindungsgemäßen Erzeugnisses hinsichtlich sowohl seiner Elastizität als auch seiner Heißfestigkeit vom Massenverhältnis der Oxide zueinander abhängen können.

So wurde festgestellt, dass sich die Eigenschaften des erfindungsgemäßen Erzeugnisses hinsichtlich seiner Elastizität sowie in seiner Heißfestigkeit verbessern können, wenn das erfindungsgemäße Erzeugnis eine chemische Zusammensetzung aufweist, wonach das Massenverhältnis von Al₂O₃ zu Fe₂O₃ größer 1 beträgt, bevorzugter größer 2 beträgt und noch bevorzugter größer 3 beträgt. Besonders bevorzugt liegt das Massenverhältnis der Oxide Al₂O₃ zu Fe₂O₃ im Bereich von 3 bis 8, noch bevorzugter im Bereich von 4 bis 8.

Hinsichtlich der mineralogischen Zusammensetzung des erfindungsgemäßen feuerfesten Erzeugnisses liegt das Oxid Al₂O₃ bevorzugt überwiegend als Magnesiaspinell (MgO · Al₂O₃) vor. Ferner liegt das MgO des erfindungsgemäßen feuerfesten Erzeugnisses bevorzugt überwiegend in Form von Periklas (MgO) und Magnesiaspinell (MgO · Al₂O₃) vor.

Bevorzugt weist das erfindungsgemäße Erzeugnis eine mineralogische Zusammensetzung auf, nach welcher Periklas in einem Anteil im Bereich von 89 bis 97 Masse-% und Magnesiaspinell in einem Anteil im Bereich von 2 bis 10 Masse-% vorliegt. Noch bevorzugter weist das erfindungsgemäße Erzeugnis eine mineralogische Zusammensetzung auf, wonach Periklas in einem Anteil im Bereich von 92 bis 97 Masse-% und Magnesiaspinell in einem Anteil im Bereich von 2 bis 7 Masse-% vorliegt, noch bevorzugter wonach Periklas in einem Anteil im Bereich von 94 bis 97 Masse-% und Magnesiaspinell in einem Anteil im Bereich von 2 bis 5 Masse-% vorliegt und noch bevorzugter wonach Periklas in einem Anteil im Bereich von 94 bis 96 Masse-% und Magnesiaspinell in einem Anteil im Bereich von 3 bis 5 Masse-% vorliegt. Weiter bevorzugt kann das erfindungsgemäße Erzeugnis eine mineralogische Zusammensetzung aufweisen, nach welcher die Mineralphase Dicalcium-Silikat in einem Anteil im Bereich von 0,5 bis 2 Masse-% vorliegt, insbesondere in Kombination mit den vorstehenden Anteilen an den Mineralphasen Periklas und Magnesiaspinell. Die vorgemachten Angaben in Massen-% sind jeweils bezogen auf die Gesamtmasse des erfindungsgemäßen Erzeugnisses. Die mineralogische Zusammensetzung ist qualitativ bestimmt mittels Röntgendiffraktometrie gemäß DIN EN 13925-2:2003-07, wobei die quantitativen Anteile anschließend auf Grundlage der bestimmten chemischen Zusammensetzung des Erzeugnisses berechnet werden.

Bevorzugt weist das erfindungsgemäße Erzeugnis eine Gesamtmasse an Periklas und Magnesiaspinell von wenigstens 94 Masse-% und noch bevorzugter von wenigstens 96 Masse-% auf. Weiter bevorzugt weist das erfindungsgemäße Erzeugnis eine Gesamtmasse an Periklas, Magnesiaspinell und Dicalcium-Silikat von wenigstens 95 Masse-% und noch bevorzugter von wenigstens 97 Masse-% auf. Die vorgemachten Angaben in Massen-% sind jeweils bezogen auf die Gesamtmasse des erfindungsgemäßen Erzeugnisses.

Hinsichtlich des Gefüges des erfindungsgemäßen feuerfesten Erzeugnisses ist bevorzugt vorgesehen, dass das Erzeugnis die beschichteten Körner, wie oben ausgeführt, in einem Anteil im Bereich von 5 bis 24 Masse-% umfasst und neben den beschichteten Körnern allein weitgehend oder auch vollständig Magnesia vorliegt. Insoweit ist nach einer bevorzugten Ausführungsform der Erfindung vorgesehen, dass das erfindungsgemäße feuerfeste Erzeugnis die beschichteten Körner in einem Anteil im Bereich von 5 bis 24 Masse-% umfasst und im Übrigen (also neben den beschichteten Körnern) Magnesia in einem Anteil im Bereich von 76 bis 95 Masse-%, jeweils bezogen auf die Gesamtmasse des erfindungsgemäßen Erzeugnisses. Nach einer noch bevorzugteren Ausführungsform ist vorgesehen, dass das Erzeugnis die beschichteten Körner in einem Anteil im Bereich von 5 bis 20 Masse-% und im Übrigen Magnesia in einem Anteil im Bereich von 80 bis 95 Masse-% umfasst, noch bevorzugter die beschichteten Körner in einem Anteil im Bereich von 5 bis 15 Masse-% und im Übrigen Magnesia in einem Anteil im Bereich von 85 bis 95 Masse-% umfasst und noch bevorzugter die beschichten Körner in einem Anteil von 7 bis 15 Masse-% und im Übrigen Magnesia in einem Anteil im Bereich von 85 bis 93 Masse-% umfasst, jeweils bezogen auf die Gesamtmasse des erfindungsgemäßen Erzeugnisses.

Die neben den beschichteten Körnern im erfindungsgemäßen Erzeugnis vorliegende Magnesia liegt bevorzugt in Form von versinterten Körnern aus Magnesia vor. Diese Körner aus Magnesia, die neben den beschichteten Körnern im Erzeugnis vorliegen, weisen nicht die erfindungsgemäße Beschichtung auf und werden nachfolgend auch als "nicht beschichteten Körner aus Magnesia" bezeichnet. Die Korngröße der nicht beschichteten Körner aus Magnesia im erfindungsgemäßen Erzeugnis liegt bevorzugt unter 8 mm, besonders bevorzugt unter 5 mm, bestimmt gemäß DIN EN ISO 13383-1:2016-11.

Erfindungsgemäß wurde festgestellt, dass die beschichteten Körner eine besonders vorteilhafte elastifizierende Wirkung im Erzeugnis entfalten (indiziert durch einen geringen Elastizitätsmodul), wenn die nicht beschichteten Körner aus Magnesia zumindest teilweise mit einer Korngröße vorliegen, die im Bereich der Korngröße der beschichteten Körner liegt. Insoweit ist nach einer bevorzugten Ausführungsform vorgesehen, dass die nicht beschichteten Körner aus Magnesia in einem Anteil von wenigstens 5 Masse-% in einer Korngröße von wenigstens 2 mm vorliegen. Nach einer noch bevorzugteren Ausführungsform liegen wenigstens 5 Masse-% der nicht beschichteten Körner aus Magnesia in einer Korngröße von wenigstens 3 mm vor. Nach einer noch bevorzugteren Ausführungsform liegen 5 bis 20 Masse-% der nicht beschichteten Körner aus Magnesia in einer Korngröße im Bereich von 3 bis 5 mm und 80 bis 95 Masse-% der nicht beschichteten Körner aus Magnesia in einer Korngröße unter 3 mm vor. Die vorgemachten Angaben in Masse-% sind jeweils bezogen auf die Gesamtmasse der nicht beschichteten Körner aus Magnesia. Die Korngröße ist bestimmt gemäß DIN EN ISO 13383-1:2016-11.

Das Gefüge des erfindungsgemäßen Erzeugnisses ist insoweit bevorzugt charakterisiert durch eine Matrix aus versinterten Körnern aus Magnesia, in die die erfindungsgemäßen beschichteten Körner eingebettet sind.

Das erfindungsgemäße Erzeugnis liegt bevorzugt in Form eines gebrannten feuerfesten keramischen Erzeugnisses, besonders bevorzugt in Form eines geformten gebrannten feuerfesten keramischen Erzeugnisses vor.

Bekanntermaßen ist ein "keramisches" Erzeugnis dadurch gekennzeichnet, dass es ein Gefüge aus miteinander versinterten Körnern aufweist. Das Gefüge des erfindungsgemäßen Erzeugnisses ist bevorzugt gebildet aus miteinander versinterten Körnern in Form von Körnern aus Magnesia sowie den beschichteten Körnern.

Indem das erfindungsgemäße Erzeugnis in Form eines "gebrannten" Erzeugnisses vorliegt, ist hierdurch bekanntermaßen zum Ausdruck gebracht, dass das erfindungsgemäße Erzeugnis durch einen Brand hergestellt worden ist, wobei Komponenten beziehungsweise Rohstoffe eines Versatzes derart gebrannt worden sind, dass diese miteinander versinterten und hierdurch ein erfindungsgemäßes feuerfestes keramisches Erzeugnis bildeten.

Ein "geformtes" gebranntes feuerfestes keramischen Erzeugnis zeichnet sich bekanntermaßen dadurch aus, dass dieses vor seinem keramischen Brand geformt worden ist, dem Versatz also durch eine Formung eine definierte geometrische Form verliehen worden ist, beispielsweise in Form eines Steines oder eines sonstigen Formerzeugnisses. Insoweit unterscheiden sich geformte gebrannte feuerfeste keramische Erzeugnisse von ungeformten gebrannten feuerfesten Erzeugnissen, wobei letztere auf Basis eines ungeformten feuerfesten keramischen Werkstoffes, also einer sogenannten "Masse" hergestellt worden sind.

Durch die Zurverfügungstellung des erfindungsgemäßen Erzeugnisses ist es möglich, ein feuerfestes Erzeugnis mit hervorragenden physikalischen Eigenschaften zur Verfügung zu stellen, insbesondere mit hervorragenden physikalischen Eigenschaften hinsichtlich der Elastizität und Heißfestigkeit des Erzeugnisses.

Die hervorragenden Elastizitätseigenschaften des erfindungsgemäßen Erzeugnisses werden durch ein geringes Elastizitätsmodul (E-Modul) indiziert. Nach einer bevorzugten Ausführungsform weist das erfindungsgemäße Erzeugnis ein dynamisches Elastizitätsmodul unter 40 GPa auf, besonders bevorzugt ein dynamisches Elastizitätsmodul unter 30 GPa. Das dynamische Elastizitätsmodul ist bestimmt gemäß DIN EN ISO 12680-1: 2007-05.

Die gute Heißfestigkeit des erfindungsgemäßen Erzeugnisses ist indiziert durch eine sehr hohe Temperatur T_{0,5} für das Druckerweichen. So liegt die Temperatur T_{0,5} für das Druckerweichen des erfindungsgemäßen feuerfesten Erzeugnisses bevorzugt über 1.700°C. Die Temperatur T_{0,5} für das Druckerweichen ist bestimmt gemäß DIN EN ISO 1893:2008-09.

Erfindungsgemäß wurde festgestellt, dass sich die chemische Zusammensetzung des Erzeugnisses sowie die beschichteten Körner im Erzeugnis sehr vorteilhaft auf die Festigkeit des Erzeugnisses auswirken. So kann sich ein erfindungsgemäßes Erzeugnis durch eine sehr gute Kaltdruckfestigkeit und eine sehr gute Biegefestigkeit bei Raumtemperatur auszeichnen.

Die Kaltdruckfestigkeit des erfindungsgemäßen Erzeugnisses kann insbesondere wenigstens 70 MPa betragen, bestimmt gemäß DIN EN 993-5: 1998-12.

Die Biegefestigkeit bei Raumtemperatur des erfindungsgemäßen Erzeugnisses kann insbesondere wenigstens 4 MPa betragen, bestimmt gemäß DIN EN 993-6: 1995-04.

Die erfindungsgemäßen Erzeugnisse finden besonders bevorzugt Verwendung für die Zustellung beziehungsweise Ausmauerung von Zementdrehrohröfen, also Drehrohröfen zum Brennen von Zementklinker.

Gegenstand der Erfindung ist insoweit auch die Verwendung des erfindungsgemäßen Erzeugnisses für die Zustellung von Zementdrehrohröfen. Gegenstand der Erfindung ist ferner ein Zementdrehrohrofen, der zumindest teilweise mit erfindungsgemäßen Erzeugnissen zugestellt beziehungsweise ausgemauert ist.

Gegenstand der Erfindung ist ferner ein Versatz zur Herstellung des erfindungsgemäßen Erzeugnisses, wobei der Versatz die folgenden Komponenten umfasst:
Eine erste Rohstoffkomponente, bestehend aus Körnern aus Magnesia;
eine zweite Rohstoffkomponente, bestehend aus beschichteten Körnern, die die folgenden Merkmale umfassen:
   die beschichteten Körner weisen eine Korngröße von wenigstens 2 mm auf;
   die beschichteten Körner bestehen aus Magnesia, dessen Oberfläche zumindest abschnittsweise eine Beschichtung aus Alumina aufweist.

Die erste Rohstoffkomponente, die der erfindungsgemäße Versatz umfasst, besteht aus Körnern aus Magnesia. Die erste Rohstoffkomponente besteht bevorzugt aus Körnern aus wenigstens einer der folgenden Magnesia: Sintermagnesia oder Schmelzmagnesia. Besonders bevorzugt besteht die erste Rohstoffkomponente aus Körnern aus Sintermagnesia.

Nach einer bevorzugten Ausführungsform weisen die Körner aus Magnesia der ersten Rohstoffkomponente eine Korngröße unter 8 mm auf, noch bevorzugter einer Korngröße unter 5 mm und noch bevorzugter eine Korngröße im Bereich von größer 0 bis 5 mm. Die Korngröße der Körner aus Magnesia ist bestimmt gemäß DIN 66165-2:2016-08.

Die zweite Rohstoffkomponente des erfindungsgemäßen Versatzes besteht aus beschichteten Körnern, die eine Korngröße von wenigstens 2 mm aufweisen und aus Magnesia bestehen, dessen Oberfläche zumindest abschnittsweise eine Beschichtung aus Alumina aufweist.

Mit Alumina wird gemäß der üblichen Nomenklatur ein Rohstoff auf Basis Tonerde beziehungsweise Al₂O₃ bezeichnet. Nach einer bevorzugten Ausführungsform bestehen die beschichteten Körner aus Sintermagnesia, dessen Oberfläche zumindest abschnittsweise eine Beschichtung aus Alumina aufweist.

Die beschichteten Körner des erfindungsgemäßen Versatzes weisen bevorzugt eine Korngröße auf, die der Korngröße der beschichteten Körner des erfindungsgemäßen Erzeugnisses entspricht. Insoweit weisen die beschichteten Körner des erfindungsgemäßen Versatzes, wie oben ausgeführt, eine Korngröße von wenigstens 2 mm auf, weiter bevorzugt eine Korngröße im Bereich von 2 bis 5 mm und noch bevorzugter eine Korngröße im Bereich von 3 bis 5 mm. Die Korngröße der beschichteten Körner ist bestimmt gemäß DIN 66165-2:2016-08.

Die erste Rohstoffkomponente und die zweite Rohstoffkomponente sind derart ausgewählt, dass der Versatz durch einen Brand ein erfindungsgemäßes feuerfestes Erzeugnis bildet. Insofern sind der Massenanteil und die chemische Zusammensetzung der ersten Rohstoffkomponente und der zweiten Rohstoffkomponente im erfindungsgemäßen Versatz derart ausgewählt, dass der Versatz nach einem Brand ein erfindungsgemäßes Erzeugnis bildet.

Hinsichtlich der chemischen Zusammensetzung des erfindungsgemäßen Versatzes gelten damit die zuvor gemachten Ausführungen für die chemische Zusammensetzung des erfindungsgemäßen Erzeugnisses entsprechend.

Um die beschichteten Körner des erfindungsgemäßen Versatzes zur Verfügung stellen zu können, können Körner aus Magnesia, insbesondere Körner aus Sintermagnesia, mit Alumina beschichtet werden. Bevorzugt können Körner aus Magnesia in einen Mischer oder in einer Granuliereinrichtung, beispielsweise einem Granulierteller, mit Alumina beschichtet werden. Bevorzugt liegt die Alumina bei der Beschichtung als Pulver vor, wobei zur besseren Haftung der Alumina auf der Oberfläche der Körner aus Magnesia die Alumina mit einem Anteil an Binder, beispielsweise einem organischen Binder (beispielsweise Polyvinylalkohol) oder auch Wasser, angemacht sein kann. Bevorzugt werden die Körner aus Magnesia mit Alumina in Form von kalzinierter Tonerde beschichtet, so dass nach einer besonders bevorzugten Ausführungsform im erfindungsgemäßen Versatz beschichtete Körner vorliegen in Form von Körnern aus Sintermagnesia, deren Oberfläche zumindest abschnittsweise eine Beschichtung aus kalzinierter Tonerde aufweisen. Die Körner aus Magnesia können bevorzugt eine Beschichtung aus Alumina mit einer Dicke im Bereich von 10 bis 500 µm aufweisen. Um die Körner aus Magnesia mit Alumina in einer solchen Dicke zu beschichten, werden die Körner aus Magnesia und Alumina für eine solche Dauer miteinander gemischt, bis die Magnesia in einer solchen Dicke mit Alumina beschichtet ist.

Der Massenanteil der ersten Rohstoffkomponente im Versatz kann bevorzugt dem Massenanteil an Magnesia, die neben den beschichteten Körnern im erfindungsgemäßen Erzeugnis vorliegt, entsprechen. Ferner kann die zweite Rohstoffkomponente bevorzugt dem Massenanteil der beschichteten Körner im erfindungsgemäßen Erzeugnis entsprechen. Nach einer bevorzugten Ausführungsform umfasst der erfindungsgemäße Versatz die erste Rohstoffkomponente in einem Massenanteil im Bereich von 76 bis 95 Masse-% und die zweite Rohstoffkomponente in einem Massenanteil im Bereich von 5 bis 24 Masse-%, noch bevorzugter die erste Rohstoffkomponente in einem Massenanteil im Bereich von 80 bis 95 Masse-% und die zweite Rohstoffkomponente in einem Masseanteil im Bereich von 5 bis 20 Masse-%, noch bevorzugter die erste Rohstoffkomponente in einem Masseanteil im Bereich von 85 bis 95 % und die zweite Rohstoffkomponente in einem Masseanteil im Bereich von 5 bis 15 Masse-% und noch bevorzugter die erste Rohstoffkomponente in einem Massenanteil von 85 bis 93 Masse-% und die zweite Rohstoffkomponente in einem Massenanteil im Bereich von 7 bis 15 Masse-%, jeweils bezogen auf die Gesamtmasse des erfindungsgemäßen Versatzes.

Durch Brennen des erfindungsgemäßen Versatzes ist ein erfindungsgemäßes feuerfestes Erzeugnis herstellbar. Während des Brandes bildet die Beschichtung aus Alumina dabei mit der Magnesia der beschichteten Körner, und teilweise auch mit der Magnesia der ersten Rohstoffkomponente, in-situ Magnesiaspinell aus. Dieser in-situ während des Brandes gebildete Magnesiaspinell bildet die Beschichtung aus Magnesiaspinell, das die beschichteten Körner des erfindungsgemäßen Erzeugnisses aufweisen. Ferner versintern die Körner der ersten Rohstoffkomponente und der zweiten Rohstoffkomponente des erfindungsgemäßen Versatzes während des Brandes miteinander, so dass nach dem Brand ein erfindungsgemäßes Erzeugnis in Form eines gebrannten feuerfesten keramischen Erzeugnisses vorliegt.

Gegenstand der Erfindung ist auch ein Verfahren zur Herstellung des erfindungsgemäßen feuerfesten Erzeugnisses, welches die folgenden Schritte umfasst.

Zur Verfügungstellung eines erfindungsgemäßen Versatzes;
Formen des Versatzes zu einem geformten ungebrannten feuerfesten Erzeugnis;
Brennen des geformten ungebrannten feuerfesten Erzeugnisses zu einem geformten gebrannten feuerfesten keramischen Erzeugnis.

Der für die Durchführung des erfindungsgemäßen Verfahrens zur Verfügung gestellte Versatz kann vor seinem Formen bevorzugt gemischt werden, insbesondere in einem Mischer, beispielsweise in einem Eirich-Mischer.

Der für die Durchführung des erfindungsgemäßen Verfahrens zur Verfügung gestellte Versatz kann bevorzugt mit einem Bindemittel versehen werden, bevorzugt während des Mischens des Versatzes. Als Bindemittel kann bevorzugt ein übliches, aus dem Stand der Technik bekanntes Bindemittel für feuerfeste keramische Versätze verwendet werden, bevorzugt ein temporäres Bindemittel, beispielsweise ein organisches Bindemittel, insbesondere beispielsweise Ligninsulfonat. Das Bindemittel kann in den notwendigen Anteilen zugegeben werden, insbesondere in solchen Anteilen, dass der Versatz, insbesondere während des Mischens, eine feuchtkrümelige Konsistenz aufweist. Beispielsweise kann ein Bindemittel, insbesondere beispielsweise ein temporäres Bindemittel, in Anteilen in Bereich von 1 bis 3 % zugegeben, bezogen auf die Gesamtmasse des Versatzes ohne das Bindemittel.

Zum Formen des Versatzes kann der, gegebenenfalls gemischte, Versatz insbesondere gepresst werden. Nach dem Formen des Versatzes wird ein geformtes ungebranntes feuerfestes Erzeugnis erhalten, also ein sogenannter Grünkörper oder Grünling.

Das geformte ungebrannte feuerfeste Erzeugnis kann vor dem Brennen gegebenenfalls noch getrocknet werden, beispielsweise in einem Trockenofen. Das geformte ungebrannte Erzeugnis kann beispielsweise bei Temperaturen im Bereich von 100 bis 300°C getrocknet werden.

Das, gegebenenfalls getrocknete, geformte ungebrannte feuerfeste Erzeugnis wird anschließend gebrannt. Dabei wird das geformte ungebrannte feuerfeste Erzeugnis bei solchen Temperaturen gebrannt, dass nach dem Brand ein geformtes gebranntes feuerfestes keramisches Erzeugnis erhalten wird. Durch das Brennen versintern die Komponenten des Versatzes miteinander, so dass das gebrannte Erzeugnis als keramisches Erzeugnis, also als gesintertes feuerfestes Erzeugnis vorliegt.

Bevorzugt ist vorgesehen, das geformte ungebrannte feuerfeste Erzeugnis bei Temperaturen im Bereich von 1.500 bis 1.700°C zu brennen, besonders bevorzugt bei Temperaturen im Bereich von 1.550 bis 1.650°C.

Das Brennen kann bevorzugt für eine Dauer im Bereich von 4 bis 8 Stunden bei den vorbezeichneten Brenntemperaturen durchgeführt werden.

Weitere Merkmale der Erfindung ergeben sich aus den Ansprüchen.

Sämtliche Merkmale der Erfindung können, einzeln oder in Kombination, beliebig miteinander kombiniert sein.

Ausführungsbeispiele der Erfindung werden nachfolgend näher beschrieben, wobei die in den Ausführungsbeispielen angegeben physikalischen, chemischen und mineralogischen Messwerte gemäß den oben angegebenen Normen bestimmt wurden.

### Erstes Ausführungsbeispiel

Gemäß einem ersten Ausführungsbeispiel wurde zunächst ein Versatz zur Verfügung gestellt, der eine erste Rohstoffkomponente aus Körnern aus Sintermagnesia und eine zweite Rohstoffkomponente aus beschichteten Körnern, die aus mit kalzinierter Tonerde beschichteten Körnern aus Sintermagnesia bestanden, enthielt. Bezogen auf die Gesamtmasse des Versatzes lag die erste Rohstoffkomponente in einem Anteil von 85 Masse-% und die zweite Rohstoffkomponente in einem Anteil von 15 Masse-% vor.

Die Körner aus Sintermagnesia der ersten Rohstoffkomponente lagen mit einer Korngröße im Bereich von > 0 bis 5 mm vor und wiesen folgende Korngrößenverteilung auf, bezogen auf die Gesamtmasse des Versatzes:

| | |
|---|---|
| 3 bis 5 mm: | 9 Masse-%; |
| 1 bis < 3 mm: | 27 Masse-%; |
| 0,1 bis < 1 mm: | 21 Masse-%; und |
| > 0 bis < 0,1 mm: | 28 Masse-%. |

Die Sintermagnesia der ersten Rohstoffkomponente wies folgende chemische Zusammensetzung auf, bezogen auf die Gesamtmasse der Magnesia der ersten Rohstoffkomponente:

| | |
|---|---|
| MgO: | 98,50 Masse-%; |
| Al₂O₃: | 0,06 Masse-%; |
| CaO: | 0,72 Masse-%; |
| SiO₂: | 0,14 Masse-%; |
| Fe₂O₃: | 0,52 Masse-%; und |
| Sonstige: | 0,06 Masse-%. |

Die beschichteten Körner der zweiten Rohstoffkomponente wiesen eine Korngröße im Bereich von 3 bis 5 mm auf. Die Magnesia der beschichteten Körner der zweiten Rohstoffkomponente waren gebildet aus der Sintermagnesia, aus der auch die Körner aus Sintermagnesia der ersten Rohstoffkomponente bestanden, so dass die Sintermagnesia der beschichteten Körner der zweiten Rohstoffkomponente die chemische Zusammensetzung der Sintermagnesia der Körner der ersten Rohstoffkomponente aufwies.

Die kalzinierte Tonerde, mit der die Magnesia der beschichteten Körner der zweiten Rohstoffkomponente beschichtet war, wies eine chemische Zusammensetzung mit einem Anteil an Al₂O₃ von über 99 Masse-% auf, bezogen auf die Gesamtmasse der kalzinierten Tonerde.

Die beschichteten Körner der zweiten Rohstoffkomponente wurden erhalten durch die Vermischung von Körnern aus Sintermagnesia mit einem Pulver aus kalzinierter Tonerde auf einem Granulierteller. Dabei betrug das Massenverhältnis von Sintermagnesia zu kalzinierter Tonerde 4:1, so dass auch die beschichteten Körner der zweiten Rohstoffkomponente einen Massenanteil an Magnesia von 80 Masse-% und einen Massenanteil von kalzinierter Tonerde von 20 Masse-% aufwiesen, bezogen auf die Gesamtmasse der beschichteten Körner. Der Mischung aus Sintermagnesia und kalzinierter Tonerde wurde auf dem Granulierteller ein Bindemittel in Form von Polyvinylalkohol in einem Masseanteil von 1,5 Masse-%, bezogen auf die Gesamtmasse aus Sintermagnesia und kalzinierter Tonerde ohne das Polyvinylalkohol, zugegeben, um die Haftung der kalzinierten Tonerde auf der Sintermagnesia zu verbessern.

Zur Durchführung des erfindungsgemäßen Verfahrens wurde der Versatz gemäß dem vorbeschriebenen Ausführungsbeispiel in einem Eirich-Mischer unter Zugabe von 3 Masse-% Ligninsulfonat, bezogen auf die Gesamtmasse des Versatzes ohne das Ligninsulfonat, gemischt.

Die Mischung wurde anschließend durch Pressen zu einem geformten ungebrannten feuerfesten Erzeugnis, einen sogenannten Grünkörper, geformt.

Das geformte ungebrannte feuerfeste Erzeugnis wurde anschließend in einem Ofen bei 1.590°C für 6 Stunden gebrannt. Nach dem Abkühlen wurde eine Ausführungsform eines erfindungsgemäßen Erzeugnisses in Form eines gebrannten feuerfesten keramischen Erzeugnisses erhalten.

Das gemäß dem Ausführungsbeispiel erhaltene, gebrannte Erzeugnis wies eine chemische Zusammensetzung auf, nach welcher die folgenden Oxide jeweils in den folgenden Anteilen vorlagen:

| | |
|---|---|
| MgO: | 94,30 Masse-%; |
| Al₂O₃ : | 3,44 Masse-%; |
| Fe₂O₃: | 0,58 Masse-%, |
| CaO: | 0,99 Masse-%; |
| SiO₂: | 0,42 Masse-%; |
| MnO: | 0,10 Masse-%; und |
| Glühverlust (LOI): | 0,17 Masse-%. |

Das feuerfeste Erzeugnis wies ein Gefüge aus miteinander versinterten Körnern in Form von Körnern aus Magnesia sowie beschichteten Körnern auf, wobei die beschichteten Körner eine Korngröße im Bereich von 3 bis 5 mm aufwiesen und aus Magnesia bestanden, dessen Oberfläche eine Beschichtung aus Magnesiaspinell aufwies.

Der Massenanteil der Körner aus Magnesia betrug 85 Masse-% und der Anteil der beschichteten Körner 15 Masse-%, jeweils bezogen auf die Gesamtmasse des Erzeugnisses.

Die Beschichtung aus Magnesiaspinell wies eine Dicke von etwa 230 µm auf.

Bei Messung der mineralogischen Zusammensetzung des feuerfesten Erzeugnisses ergaben sich Anteile an Periklas im Bereich von 94 bis 95 Masse-%, an Magnesiaspinell im Bereich von 4 bis 5 Masse-% und an Dicalcium-Silikat im Bereich von 0,5 bis 1,5 Masse-%, jeweils bezogen auf die Gesamtmasse des Erzeugnisses. Der Magnesiaspinell lag als stöchiometrischer Magnesiaspinell vor.

Die physikalischen Werte des Erzeugnisses waren wie folgt:
Dynamischer Elastizitätsmodul: 26,6 GPa;
Temperatur T_{0,5} für das Druckerweichen: > 1.700°C;
Kaltdruckfestigkeit: 84 MPa; und
Biegefestigkeit bei Raumtemperatur: 6,4 MPa.

### Zweites Ausführungsbeispiel

Das zweite Ausführungsbeispiel entsprach dem ersten Ausführungsbeispiel, jedoch mit folgenden Änderungen.

Bezogen auf die Gesamtmasse des Versatzes lag die erste Rohstoffkomponente in einem Anteil von 90 Masse-% und die zweite Rohstoffkomponente in einem Anteil von 10 Masse-% vor, jeweils bezogen auf die Gesamtmasse des Versatzes.

Die Körner aus Sintermagnesia der ersten Rohstoffkomponente lagen mit einer Korngröße im Bereich von > 0 bis 5 mm vor und wiesen folgende Korngrößenverteilung auf, bezogen auf die Gesamtmasse des Versatzes:

| | |
|---|---|
| 3 bis 5 mm: | 10 Masse-%; |
| 1 bis < 3 mm: | 29 Masse-%; |
| 0,1 bis < 1 mm: | 22 Masse-%; und |
| > 0 bis < 0,1 mm: | 29 Masse-% |

Das Massenverhältnis von Sintermagnesia zu kalzinierter Tonerde der beschichteten Körner des Versatzes betrug 7:3, so dass die beschichteten Körner der zweiten Rohstoffkomponente einen Massenanteil an Magnesia von 70 Masse-% und einen Massenanteil an kalzinierter Tonerde von 30 Masse-% aufwiesen, bezogen auf die Gesamtmasse der beschichteten Körner.

Das gemäß dem zweiten Ausführungsbeispiel erhaltene, gebrannte Erzeugnis wies eine chemische Zusammensetzung auf, nach welcher die folgenden Oxide jeweils in den folgenden Anteilen vorlagen:

| | |
|---|---|
| MgO: | 94,00 Masse-%; |
| Al₂O₃ : | 2,90 Masse-%; |
| Fe₂O₃: | 0,39 Masse-%, |
| CaO: | 1,86 Masse-%; |
| SiO₂: | 0,69 Masse-%; |
| MnO: | 0,03 Masse-%; und |
| Glühverlust (LOI): | 0,13 Masse-%. |

Der Massenanteil der Körner aus Magnesia im Erzeugnis betrug 90 Masse-% und der Anteil der beschichteten Körner 10 Masse-%, jeweils bezogen auf die Gesamtmasse des Erzeugnisses.

Die Beschichtung aus Magnesiaspinell wies eine Dicke von etwa 380 µm auf.

Bei Messung der mineralogischen Zusammensetzung des feuerfesten Erzeugnisses ergaben sich Anteile an Periklas im Bereich von 94 bis 95 Masse-%, an Magnesiaspinell im Bereich von 3,5 bis 4,5 Masse-% und an Dicalcium-Silikat im Bereich von 1 bis 2 Masse-%, jeweils bezogen auf die Gesamtmasse des Erzeugnisses. Der Magnesiaspinell lag als stöchiometrischer Magnesiaspinell vor.

Die physikalischen Werte des Erzeugnisses waren wie folgt:
Dynamischer Elastizitätsmodul: 27,9 GPa;
Temperatur T_{0,5} für das Druckerweichen: > 1.700°C;
Kaltdruckfestigkeit: 72 MPa; und
Biegefestigkeit bei Raumtemperatur: 4,6 MPa.

### Erstes Vergleichsbeispiel

Zu Vergleichszwecken wurde ein Erzeugnis, das kein Ausführungsbeispiel der Erfindung darstellte, hergestellt.

Das gemäß dem ersten Vergleichsbeispiel hergestellte Erzeugnis wurde gemäß dem zweiten Ausführungsbeispiel hergestellt, jedoch mit dem einzigen Unterschied, dass die beschichteten Körner der zweiten Rohstoffkomponente des Versatzes eine Korngröße im Bereich von 0,5 bis 1 mm aufwiesen.

Das gemäß dem ersten Vergleichsbeispiel erhaltene, gebrannte Erzeugnis wies eine chemische Zusammensetzung auf, nach welcher die folgenden Oxide jeweils in den folgenden Anteilen vorlagen:

| | |
|---|---|
| MgO: | 93,90 Masse-%; |
| Al₂O₃ : | 3,03 Masse-%; |
| Fe₂O₃: | 0,33 Masse-%, |
| CaO: | 1,82 Masse-%; |
| SiO₂: | 0,69 Masse-%; |
| MnO: | 0,03 Masse-%; und |
| Glühverlust (LOI): | 0,20 Masse-%. |

Das Erzeugnis wies ein Gefüge aus miteinander versinterten Körnern in Form von Körnern aus Magnesia sowie beschichteten Körnern auf, wobei die beschichteten Körner eine Korngröße im Bereich von 0,5 bis 1 mm aufwiesen und aus Magnesia bestanden, dessen Oberfläche eine Beschichtung aus Magnesiaspinell aufwies.

Die Beschichtung aus Magnesiaspinell wies eine Dicke von etwa 80 µm auf.

Die physikalischen Werte des Erzeugnisses waren wie folgt:
Dynamischer Elastizitätsmodul: 69,3 GPa;
Temperatur T_{0,5} für das Druckerweichen: > 1.700°C;
Kaltdruckfestigkeit: 96 MPa; und
Biegefestigkeit bei Raumtemperatur: 12,8 MPa.

### Zweites Vergleichsbeispiel

Zu Vergleichszwecken wurde ein weiteres Erzeugnis, das kein Ausführungsbeispiel der Erfindung darstellte, hergestellt.

Das gemäß diesem zweiten Vergleichsbeispiel hergestellte Erzeugnis wurde gemäß dem zweiten Ausführungsbeispiel hergestellt, jedoch mit dem einzigen Unterschied, dass die erste Rohstoffkomponente in einem Anteil von 95 Masse-% und die zweite Rohstoffkomponente in einem Anteil von nur 5 Masse-% vorlag, jeweils bezogen auf die Gesamtmasse des Versatzes.

Das gemäß dem zweiten Vergleichsbeispiel erhaltene, gebrannte Erzeugnis wies eine chemische Zusammensetzung auf, nach welcher die folgenden Oxide jeweils in den folgenden Anteilen vorlagen:

| | |
|---|---|
| MgO: | 95,30 Masse-%; |
| Al₂O₃ : | 1,43 Masse-%; |
| Fe₂O₃: | 0,39 Masse-%, |
| CaO: | 1,93 Masse-%; |
| SiO₂: | 0,71 Masse-%; |
| MnO: | 0,03 Masse-%; und |
| Glühverlust (LOI): | 0,21 Masse-%. |

Die Beschichtung aus Magnesiaspinell wies eine Dicke von etwa 130 µm auf.

Die physikalischen Werte des Erzeugnisses waren wie folgt:
Dynamischer Elastizitätsmodul: 48,8 GPa;
Temperatur T_{0,5} für das Druckerweichen: > 1.700°C;
Kaltdruckfestigkeit: 73 MPa; und
Biegefestigkeit bei Raumtemperatur: 6,2 MPa.

### Diskussion der Versuchsergebnisse

Die gemäß dem ersten und zweiten Ausführungsbeispiel hergestellten Erzeugnisse wiesen jeweils eine sehr hohe Gefügeflexibilität auf, indiziert durch einen sehr niedrigen Elastizitätsmodul von jeweils unter 30 GPa, nämlich von 26,6 GPa beziehungsweise 27,9 GPa. Gleichzeitig wiesen die Erzeugnisse gute Werte für das Druckerweichen, die Kaltdruckfestigkeit und die Biegefestigkeit bei Raumtemperatur auf.

Das gemäß dem ersten Vergleichsbeispiel hergestellte Erzeugnis wies zwar eine chemische Zusammensetzung auf, die einer chemischen Zusammensetzung eines erfindungsgemäßen Erzeugnisses entsprach. Allerdings lag die Korngröße der beschichteten Körner mit 0,5 bis 1 mm unter der Korngröße der beschichteten Körner eines erfindungsgemäßen Erzeugnisses. Das Erzeugnis gemäß dem ersten Vergleichsbeispiel wies gegenüber den Erzeugnissen gemäß dem ersten und zweiten Ausführungsbeispiel eine deutlich schlechtere Gefügeflexibilität auf, indiziert durch einen hohen Elastizitätsmodul von 69,3 GPa.

Das gemäß dem zweiten Vergleichsbeispiel hergestellte Erzeugnis wies zwar eine Korngröße der beschichteten Körner auf, die einer Korngröße eines erfindungsgemäßen Erzeugnisses entsprach. Allerdings lag (bedingt durch den geringen Anteil an beschichteten Körnern im Erzeugnis) der Anteil an Al₂O₃ gemäß der chemischen Zusammensetzung des Erzeugnisses unter dem Anteil eines erfindungsgemäßen Erzeugnisses. Das Erzeugnis gemäß dem zweiten Vergleichsbeispiel wies gegenüber den Erzeugnissen gemäß dem ersten und zweiten Ausführungsbeispiel eine deutlich schlechtere Gefügeflexibilität auf, indiziert durch einen hohen Elastizitätsmodul von 48,8 GPa.

## Patentansprüche

1. Feuerfestes Erzeugnis, umfassend die folgenden Merkmale:
1.1 das Erzeugnis weist eine chemische Zusammensetzung auf, nach welcher die folgenden Oxide jeweils in den folgenden Anteilen vorliegen:
| | | |
|---|---|---|
| 1.1.1 | MgO: | wenigstens 92 Masse-%; |
| 1.1.2 | Al₂O₃: | 1,5 bis 7 Masse-%; |
| 1.1.3 | Fe₂O₃: | unter 3 Masse-%; |
| 1.1.4 | CaO + SiO₂: | 1 bis 3 Masse-%; |
1.2 das Erzeugnis umfasst beschichtete Körner, die die folgenden Merkmale umfassen:
1.2.1 die beschichteten Körner weisen eine Korngröße von wenigstens 2 mm auf;
1.2.2 die beschichteten Körner bestehen aus Magnesia, dessen Oberfläche zumindest abschnittsweise eine Beschichtung aus Magnesiaspinell aufweist.

2. Erzeugnis nach Anspruch 1, das eine chemische Zusammensetzung mit einem Anteil an MgO im Bereich von 92 bis 96 Masse-% aufweist.

3. Erzeugnis nach wenigstens einem der vorhergehenden Ansprüche, das eine chemische Zusammensetzung mit einem Anteil an Al₂O₃ im Bereich von 2 bis 3,5 Masse-% aufweist.

4. Erzeugnis nach wenigstens einem der vorhergehenden Ansprüche, das eine chemische Zusammensetzung mit einem Anteil an Fe₂O₃ unter 1 Masse-% aufweist.

5. Erzeugnis nach wenigstens einem der vorhergehenden Ansprüche, das ein dynamisches Elastizitätsmodul unter 40 GPa aufweist.

6. Erzeugnis nach wenigstens einem der vorhergehenden Ansprüche, das eine Temperatur T_{0,5} für das Druckerweichen über 1.700°C aufweist.

7. Erzeugnis nach wenigstens einem der vorhergehenden Ansprüche, wobei die Beschichtung aus Magnesiaspinell eine Dicke im Bereich von 10 bis 500 µm aufweist.

8. Erzeugnis nach wenigstens einem der vorhergehenden Ansprüche, wobei die beschichteten Körner eine Korngröße im Bereich von 3 bis 5 mm aufweisen.

9. Erzeugnis nach wenigstens einem der vorhergehenden Ansprüche, das die beschichteten Körner in einem Anteil im Bereich von 5 bis 24 Masse-% umfasst.

10. Erzeugnis nach wenigstens einem der vorhergehenden Ansprüche, das die beschichteten Körner in einem Anteil im Bereich von 5 bis 24 Masse-% umfasst und im Übrigen Magnesia in einem Anteil im Bereich von 76 bis 95 Masse-% umfasst.

11. Erzeugnis nach wenigstens einem der vorhergehenden Ansprüche in Form eines geformten gebrannten feuerfesten keramischen Erzeugnisses.

12. Versatz zur Herstellung des Erzeugnisses nach wenigstens einem der vorhergehenden Ansprüche, umfassend die folgenden Komponenten:
12.1 Eine erste Rohstoffkomponente, bestehend aus Körnern aus Magnesia;
12.2 eine zweite Rohstoffkomponente, bestehend aus beschichteten Körnern, die die folgenden Merkmale umfassen:
12.2.1 die beschichteten Körner weisen eine Korngröße von wenigstens 2 mm auf;
12.2.2 die beschichteten Körner bestehen aus Magnesia, dessen Oberfläche zumindest abschnittsweise eine Beschichtung aus Alumina aufweist.

13. Versatz nach Anspruch 12, wobei die beschichteten Körner eine Korngröße im Bereich von 3 bis 5 mm aufweisen.

14. Verfahren zur Herstellung des Erzeugnisses nach Anspruch 11, umfassend die folgenden Schritte:
14.1 Zur Verfügungstellung eines Versatzes nach wenigstens einem der Ansprüche 12 oder 13;
14.2 Formen des Versatzes zu einem geformten ungebrannten feuerfesten Erzeugnis;
14.3 Brennen des geformten ungebrannten feuerfesten Erzeugnisses zu einem geformten gebrannten feuerfesten keramischen Erzeugnis.

15. Verwendung eines Erzeugnisses nach wenigstens einem der Ansprüche 1 bis 11 für die Zustellung von Zementdrehrohröfen.

## Claims

1. Refractory product comprising the following features:
1.1 the product has a chemical composition according to which the following oxides are present in the following proportions:
| | | |
|---|---|---|
| 1.1.1 | MgO: | at least 92% by mass; |
| 1.1.2 | Al₂O₃: | 1.5 to 7% by mass; |
| 1.1.3 | Fe₂O₃: | less than 3% by mass; |
| 1.1.4 | CaO + SiO₂: | 1 to 3% by mass; |
1.2. the product comprises coated grains having the following features:
1.2.1 the coated grains have a grain size of at least 2 mm;
1.2.2 the coated grains consist of magnesia, the surface of which has a coating of magnesia spinel at least in sections.

2. The product according to claim 1, having a chemical composition with a content of MgO in the range from 92 to 96% by mass.

3. The product according to at least one of the preceding claims, having a chemical composition with a content of Al₂O₃ in the range from 2 to 3.5% by mass.

4. The product according to at least one of the preceding claims, having a chemical composition with a content of Fe₂O₃ of less than 1% by mass.

5. The product according to at least one of the preceding claims, having a dynamic modulus of elasticity of less than 40 GPa.

6. The product according to at least one of the preceding claims, having a temperature T_{0.5} for refractoriness under load above 1,700°C.

7. The product according to at least one of the preceding claims, the coating of magnesia spinel having a thickness in the range from 10 to 500 µm.

8. The product according to at least one of the preceding claims, the coated grains having a grain size in the range from 3 to 5 mm.

9. The product according to at least one of the preceding claims, comprising the coated grains in a proportion in the range from 5 and 24% by mass.

10. The product according to at least one of the preceding claims, comprising the coated grains in a proportion in the range from 5 to 24% by mass and further comprising magnesia in a proportion in the range from 76 to 95% by mass.

11. The product according to at least one of the preceding claims in the form of a shaped fired refractory ceramic product.

12. A batch for producing the product according to at least one of the preceding claims, comprising the following components:
12.1 A first raw material component, consisting of grains of magnesia;
12.2 a second raw material component, consisting of coated grains, comprising the following features:
12.2.1 the coated grains have a grain size of at least 2 mm;
12.2.2 the coated grains consist of magnesia, the surface of which has a coating of alumina at least in sections.

13. The batch according to claim 12, wherein the coated grains have a grain size in the range from 3 to 5 mm.

14. A method for the production of the product according to claim 11, comprising the following steps:
14.1 Providing a batch according to at least one of claims 12 or 13;
14.2 shaping the batch into a shaped unfired refractory product;
14.3 firing the shaped unfired refractory product into a shaped fired refractory ceramic product.

15. Use of a product according to at least one of claims 1 to 11 for the lining of cement rotary kilns.

## Revendications

1. Produit réfractaire, comprenant les caractéristiques suivantes :
1.1 le produit présente une composition chimique d'après laquelle les oxydes suivants sont respectivement présents selon les pourcentages suivants :
| | | |
|---|---|---|
| 1.1.1 | MgO : | au moins 92% en masse ; |
| 1.1.2 | Al₂O₃ : | 1,5 à 7% en masse ; |
| 1.1.3 | Fe₂O₃ : | moins de 3% en masse ; |
| 1.1.4 | CaO + SiO₂ : | 1 à 3% en masse ; |
1.2 le produit comprend des grains enrobés qui présentent les caractéristiques suivantes :
1.2.1 les grains enrobés présentent une granulométrie d'au moins 2 mm ;
1.2.2 les grains enrobés se composent de magnésie sont la surface présente au moins en partie un enrobage de magnésie spinelle.

2. Produit selon la revendication 1, lequel présente une composition chimique avec un pourcentage en MgO dans la plage de 92 à 96% en masse.

3. Produit selon l'une au moins des revendications précédentes, lequel présente une composition chimique avec un pourcentage en Al₂O₃ dans la plage de 2 à 3,5% en masse.

4. Produit selon l'une au moins des revendications précédentes, lequel présente une composition chimique avec un pourcentage en Fe₂O₃ inférieur à 1% en masse.

5. Produit selon l'une au moins des revendications précédentes, lequel présente un module d'élasticité dynamique inférieur à 40 GPa.

6. Produit selon l'une au moins des revendications précédentes, lequel présente une température T_{0,5} pour l'affaissement sous charge supérieure à 1 700°C.

7. Produit selon l'une au moins des revendications précédentes, dans lequel l'enrobage de magnésie spinelle présente une épaisseur dans la plage de 10 à 500 µm.

8. Produit selon l'une au moins des revendications précédentes, dans lequel les grains enrobés présentent une granulométrie de 3 à 5 mm.

9. Produit selon l'une au moins des revendications précédentes, lequel comprend les grains enrobés selon un pourcentage dans la plage de 5 à 24% en masse.

10. Produit selon l'une au moins des revendications précédentes, lequel comprend les grains enrobés selon un pourcentage dans la plage de 5 à 24% en masse et comprend par ailleurs de la magnésie selon un pourcentage dans la plage de 76 à 95% en masse.

11. Produit selon l'une au moins des revendications précédentes, sous la forme d'un produit réfractaire moulé en céramique cuit.

12. Mélange pour la fabrication du produit selon l'une au moins des revendications précédentes, comprenant les éléments constitutifs suivants :
12.1 un premier composant de matière première, constitué de grains de magnésie ;
12.2 un deuxième composant de matière première, constitué de grains enrobés qui présentent les caractéristiques suivantes :
12.2.1 les grains enrobés présentent une granulométrie d'au moins 2 mm ;
12.2.2 les grains enrobés se composent de magnésie dont la surface présente au moins en partie un enrobage en alumine.

13. Mélange selon la revendication 12, dans lequel les grains enrobés présentent une granulométrie dans la plage de 3 à 5 mm.

14. Procédé pour la fabrication du produit selon la revendication 11, comprenant les étapes suivantes :
14.1 la mise à disposition d'un mélange selon l'une au moins des revendications 12 ou 13 ;
14.2 le moulage du mélange en un produit réfractaire moulé non cuit ;
14.3 la cuisson du produit réfractaire moulé non cuit pour donner un produit réfractaire moulé en céramique cuit.

15. Utilisation d'un produit selon l'une au moins des revendications 1 à 11 pour le garnissage de fours rotatifs à ciment.
